# FASCICULE DE BREVET EUROPEEN

(11) **EP 3 856 415 B1**
(45) Date de publication et mention de la délivrance du brevet: **08.03.2023**
(21) Numéro de dépôt: 19774105.1
(22) Date de dépôt: 27.09.2019
(51) Int. Cl.: B01L 3/00, G01N 27/38

(54) **PROCÉDÉ DE NETTOYAGE ET/OU DE RÉGÉNÉRATION D'UN CAPTEUR MICROFLUIDIQUE EN VERRE POUR L'ANALYSE DE MÉTAUX**
VERFAHREN ZUR REINIGUNG UND/ODER REGENERIERUNG EINES MIKROFLUIDISCHEN GLASSENSORS ZUR ANALYSE VON METALLEN
METHOD FOR CLEANING AND/OR REGENERATING A GLASS MICROFLUIDIC SENSOR FOR THE ANALYSIS OF METALS

(30) Priorité: 28.09.2018 FR 1858991
(43) Date de publication de la demande: 04.08.2021
(73) Titulaire: Klearia, 06560 Valbonne (FR)
(72) Inventeur: DOUNGMENE, Floriant, 06200 Nice (FR); GAUTRIN, Lisa, 06800 Cagnes sur Mer (FR); NANTEUIL, Clément, 06800 Cagnes sur Mer (FR)
(74) Mandataire: Lavoix
(86) Numéro de dépôt international: PCT/EP2019/076253
(87) Numéro de publication internationale: WO 2020/065042

(56) Documents cités:
- CN-A- 108 548 860
- CN-B- 103 558 269
- KR-A- 20130 141 032
- LEE M. FISCHER ET AL: "Gold cleaning methods for electrochemical detection applications", MICROELECTRONIC ENGINEERING., vol. 86, no. 4-6, 3 décembre 2008 (2008-12-03), pages 1282-1285, XP055571602, NL ISSN: 0167-9317, DOI: 10.1016/j.mee.2008.11.045
- HAN KWI NAM ET AL: "On-chip electrochemical detection of bio/chemical molecule by nanostructures fabricated in a microfluidic channel", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER BV, NL, vol. 177, 21 novembre 2012 (2012-11-21), pages 472-477, XP028964048, ISSN: 0925-4005, DOI: 10.1016/J.SNB.2012.11.030

## Description

La présente invention concerne un procédé microfluidique de nettoyage et/ou de régénération d'au moins un capteur microfluidique comprenant au moins un microcanal en verre formant un circuit microfluidique et au moins deux électrodes, comprenant au moins les étapes suivantes :
- une étape N) de nettoyage du circuit microfluidique comprenant au moins la circulation d'un échantillon de fluide dans le microcanal ; et
- une étape de nettoyage du circuit microfluidique comprenant au moins la circulation d'une solution d'acide nitrique dans le microcanal.

Les capteurs électrochimiques classiques, utilisés notamment dans la détection de substances chimiques, présentent une taille macroscopique. Afin d'améliorer la sensibilité des mesures, des capteurs microfluidiques sont préférés, car ils présentent des limites de détection (LOD) et de quantification (LOQ) plus basses que les capteurs classiques. En effet, dans le cas de capteurs microfluidiques, l'aspect confiné des réactifs dans un petit volume favorise une cinétique des réactions rapides entre les différentes espèces, et leur transfert vers l'électrode se fait de façon accélérée. Ainsi, les LOD de l'ordre du µg/L (ou ppb), voire du ng/L (ou ppt), peuvent être atteintes lors de la détection d'élément trace, notamment de métaux à l'état de traces.

Cependant, des seuils de détection et de quantification aussi faibles nécessitent une attention particulière ; notamment, un souci constant réside dans l'élimination de toute quantité de substance, même minime, dans le système d'analyse. Cela permet bien évidemment de ne pas fausser les résultats des mesures.

Parmi les éléments qui nécessitent un nettoyage particulier et/ou une régénération, on retrouve principalement les capteurs des puces microfluidiques, qui sont généralement constitués par au moins un microcanal (formant un circuit microfluidique) et au moins deux électrodes.

Aujourd'hui, plusieurs types de matériaux sont couramment utilisés pour fabriquer des puces microfluidiques : le verre et les polymères (par exemple de type polydiméthylsiloxanes (PDMS) ou de type Cyclic Olefin Polymer (COC)).

La demande KR 2013-0141032 décrit une méthode de nettoyage de micropuces comprenant des électrodes et des microcanaux ; cette méthode est mise en oeuvre lors de la fabrication des micopuces et peut impliquer une étape de rinçage d'un microcanal en verre comprenant une électrode couverte d'or avec de l'acétone suivie d'une étape de voltammétrie cyclique à l'aide d'une solution d'acide sulfurique.

Les demandes CN 108 548 860 et CN 103 558 269 décrivent respectivement une méthode de détection d'arsenic trivalent à l'aide de graphène réduit/thiocyanate trimérique, et une méthode de détection enzymatique de résidus de pesticides de type chlorpyrifos. Enfin, la publication Fischer et al ("Gold cleaning methods for electrochemical détection applications", MICROELECTRONIC ENGINEERING., vol. 86, no. 4-6, 3 décembre 2008 (2008-12-03), pages 1282-1285) divulgue différentes méthodes de nettoyage d'électrodes en or.

Les cellules électrochimiques à base de verre utilisent une grande variété de matériaux d'électrodes (carbone, or, platine ou encore matériau semi-conducteur). Le choix du verre peut être indiqué en raison des propriétés favorables de ce matériau : il bénéficie des mêmes propriétés de stabilité de surface, de conductivité thermique et de compatibilité avec les solvants que le silicium. De plus, le verre est biocompatible, chimiquement inerte, isolant, hydrophile et permet des revêtements efficaces.

Cependant, le verre présente l'inconvénient d'adsorber certaines espèces chimiques, telles que les métaux, ce qui peut fausser les résultats d'analyse. D'autant que dans le domaine microfluidique, en raison du rapport surface / volume fortement augmenté et, cet inconvénient est exacerbé.

Les cellules électrochimiques en PDMS sont très pratiques en recherche, de par le faible coût de prototypage et le temps nécessaire pour fabriquer un nouveau design. Cependant, les polymères de type PDMS présentent plusieurs inconvénients: une détérioration peut être observée lors de l'exposition à certains produits chimiques, par exemple à certains acides, et ils ont tendance à l'adsorption. Le PDMS est de plus sujet à un vieillissement rapide, le rendant notamment incompatible pour des besoins industriels hors R&D.

La faible résistance chimique aux acides et aux solvants, combinée à une faible adhérence des dépôts de couches minces, limitent ainsi l'utilisation des polymères pour les besoins d'analyses récurrentes au sein d'un même système.

Ainsi, il existe un besoin pour un système microfluidique performant qui soit réutilisable, fiable, dont les mesures soient reproductibles et qui ne dénaturent pas l'échantillon (sans contamination).

La Demanderesse a maintenant mis au point un procédé particulier de nettoyage de capteur microfluidique en verre, qui permet de le nettoyer efficacement, afin de le réutiliser de façon fiable sans contamination. Un tel procédé permet ainsi de surmonter les problématiques liées à l'usage du verre, tout en bénéficiant de ses avantages.

La présente invention a ainsi pour objectif de proposer un procédé de nettoyage et/ou de régénération d'un capteur microfluidique, qui soit simple et rapide à mettre en oeuvre, et qui soit efficace.

En particulier, la présente invention a pour objectif de nettoyer et/ou régénérer un capteur microfluidique, qui sert notamment pour la détection d'un élément-trace métallique (ETM), notamment l'arsenic, dans un fluide. En particulier, le procédé selon l'invention permet un nettoyage efficace du capteur microfluidique, et ne dénature pas les échantillons de fluide introduits et testés.

Un autre objectif de la présente invention est de fournir un circuit microfluidique permettant la mise en oeuvre d'un tel procédé.

L'invention se rapporte ainsi à un procédé microfluidique de nettoyage et/ou de régénération d'au moins un capteur microfluidique, comprenant au moins un microcanal en verre formant un circuit microfluidique et au moins deux électrodes, comprenant au moins les étapes suivantes :
- une étape N) de nettoyage du circuit microfluidique comprenant au moins la circulation d'un échantillon de fluide dans le microcanal ; et
- une étape de nettoyage du circuit microfluidique comprenant au moins la circulation d'une solution d'acide nitrique dans le microcanal,
et tel que défini en revendication 1.

Par capteur microfluidique, on entend un capteur composé d'au moins deux électrodes, de préférence au moins trois électrodes ; et d'au moins un microcanal en verre, ledit microcanal en verre formant un circuit microfluidique. Chaque électrode peut être toute électrode utilisable en électrochimie, comme une électrode faite d'or, éventuellement recouverte de nanoparticules d'or ; une électrode en couche mince ; une électrode en nanotubes de carbone ; ou bien une électrode formée in situ par électrodéposition.

Le procédé selon l'invention comprend, comme étape N), les quatre sous-étapes telles que définies en revendication 1.

Ce procédé peut être mis en oeuvre particulièrement facilement, dans un seul circuit microfluidique dans lequel sont réalisées les différentes étapes. Ce circuit est illustré dans la figure détaillée ci-dessous.

Le procédé selon l'invention est de préférence entièrement automatisé, et permet à l'utilisateur de s'affranchir des différentes étapes de prétraitement de l'électrode qui sont parfois complexes et nécessitent la manipulation de produits chimiques tels que des acides concentrés.

Par « fluide », on entend tout corps liquide capable de prendre la forme du récipient qui le contient. De préférence, le fluide selon l'invention est une solution. De préférence, le fluide selon l'invention est l'eau.

Par « élément-trace métallique », appelé aussi « ETM », on entend un métal toxique ou toxique au-delà d'un certain seuil. De préférence, l'ETM est choisi parmi le plomb, le mercure, l'arsenic, le cuivre, le zinc et le cadmium. De préférence, l'ETM selon l'invention est l'arsenic.

De préférence, le procédé selon l'invention est un procédé de nettoyage et/ou de régénération d'un capteur microfluidique utilisé pour détecter un ETM, notamment l'arsenic, contenu dans un fluide tel que l'eau.

De préférence, il est mis en oeuvre grâce à un dispositif portatif incluant le circuit microfluidique. De préférence, ce dispositif est automatisé, et peut être utilisé in situ.

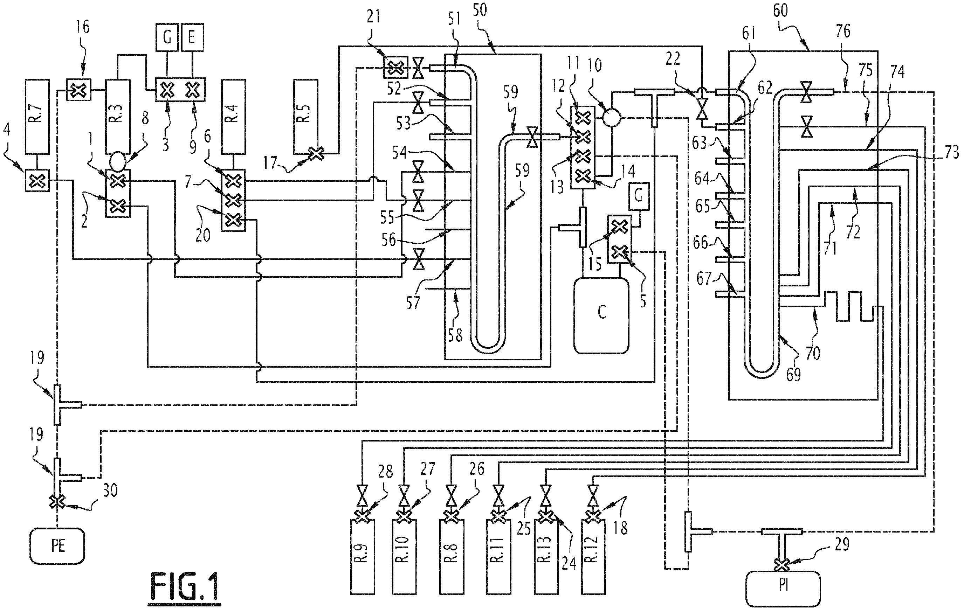

De préférence, le circuit microfluidique visé par le procédé selon l'invention comprend au moins une puce microfluidique en verre (dite puce d'analyse). Un exemple d'une telle puce est illustré par la puce d'analyse 60 sur la figure 1.

Le circuit microfluidique comprend de préférence un microcanal, appelé également « microcanal principal », et au moins deux, de préférence au moins trois, de préférence au moins quatre microcanaux fluidiquement reliés au microcanal principal. Préférentiellement, le circuit microfluidique comprend un microcanal relié fluidiquement :
- à une première extrémité, à une entrée (notamment pour l'injection de l'échantillon) et à au moins un réservoir pour l'acide nitrique, et
- à la seconde extrémité, à au moins deux réservoirs de réactifs pour régénérer au moins une électrode.

Le microcanal principal (qui est en en verre) comprend au moins deux électrodes, de préférence au moins trois électrodes qui sont:
- une électrode de travail, de préférence en or,
- une électrode de référence, de préférence en platine, et
- une contre-électrode, de préférence en platine.

Par exemple, le circuit microfluidique est un circuit d'analyse d'un fluide, notamment apte à la mise en oeuvre du procédé selon l'invention, comprenant :
- au moins un réservoir de stockage de réactif(s), de préférence l'acide nitrique et la L-cystéine, et optionnellement au moins un second réservoir de stockage comprenant au moins une solution étalon ;
- au moins une première puce microfluidique, dite puce de prémélange, comprenant au moins un premier microcanal relié fluidiquement :
   ∘ à une première extrémité, aux deux réservoirs et à une entrée, et
   ∘ à la seconde extrémité, à une cuve,
   ladite entrée convenant à l'injection d'un échantillon de fluide à analyser ; et
- au moins une seconde puce microfluidique en verre, dite puce d'analyse, comprenant au moins un second microcanal relié fluidiquement :
   ∘ à une première extrémité, à une entrée (notamment pour l'injection de l'échantillon) et à au moins un réservoir pour l'acide nitrique, et
   ∘ à la seconde extrémité, à au moins deux réservoirs de réactifs pour régénérer au moins une électrode.

La première puce et la seconde puce selon l'invention peuvent également, selon un mode de réalisation, être préparées sur un seul et même substrat. Dans un tel cas, on obtient ainsi une puce unique, comprenant un premier compartiment (correspondant à la puce de prémélange) et un second compartiment (correspondant à la puce d'analyse).

De préférence, le circuit microfluidique comprend, dans la première puce, un premier réseau de microcanaux dans lesquels circulent l'échantillon de fluide à analyser et les réactifs (comme l'acide nitrique et la L-cystéine) ; et dans la seconde puce, un second réseau de microcanaux comprenant au moins 2 électrodes, de préférence au moins trois électrodes.

De préférence, le premier réseau de microcanaux est présent dans une première puce microfluidique, généralement appelée « puce de prétraitement » ou « puce de mélange »; elle sert à mélanger les différents réactifs (tels que l'acide nitrique et la L-cystéine) avec l'échantillon, notamment dans des proportions spécifiques.

De préférence, le second réseau de microcanaux est présent dans une seconde puce microfluidique, généralement appelée « puce d'analyse » ; c'est la puce sur laquelle se fait la détection et la quantification des polluants cibles, grâce à la présence des deux ou trois électrodes, et notamment aussi grâce à la présence de solutions de calibration (ou solutions étalons).

Le circuit, intégré notamment dans des puces telles que décrites ci-avant, permet la mise en oeuvre du procédé décrit ci-dessus, de façon particulièrement facile.

Les puces microfluidiques selon l'invention sont des dispositifs miniaturisés d'analyse biologique ou chimique, qui sont constituées d'au moins une plaque de faible épaisseur (de l'ordre de quelques dizaines à quelques centaines de micromètres), constituée de verre (c'est-à-dire une substance dure, cassante et transparente, de structure vitreuse, essentiellement formée de silicates alcalins, et ayant une résistance chimique élevée), et d'un capot comprenant au moins un canal microfluidique (ou microcanal). Chaque puce est de préférence telle que décrite dans EP2576056.

Par puce en verre, on entend toute puce intégralement en verre, mais aussi toute puce dont l'interface entre la plaque et le capot est en verre. Une telle interface peut par exemple être obtenue en utilisant une plaque en verre et un capot en silicium.

De préférence, les puces constituant le circuit microfluidique selon l'invention (i.e. puce de prétraitement et puce d'analyse) comportent chacune :
- une plaque,
- un capot comportant au moins un canal microfluidique, et
- une couche unique, intermédiaire entre la plaque et le capot, formée d'une matrice inorganique de SiO₂.

De préférence, la couche unique a une épaisseur comprise entre 100 nm et 10 mm, et préférentiellement comprise entre 300 nm et 400 nm. De préférence, chaque puce comporte au moins un circuit dans le capot et/ou au moins un circuit sur le capot, associé au capot par une matrice inorganique de SiO₂.

Les puces microfluidiques sont en verre. En effet, lorsque la plaque et le capot de ladite puce sont en verre, les puces bénéficient intégralement des propriétés exceptionnelles du verre, à savoir :
- une transparence optique élevée permettant de bonnes observations ;
- une résistance mécanique élevée, présentant un module d'Young élevé et une contrainte à la rupture élevée (en fonction du type de verre utilisé) ;
- une porosité faible, ce qui rend la puce parfaitement adaptée à des applications d'analyse chimique dans des conditions de très faible concentration (analyse de toxines faiblement concentrées par exemple) qui évite toute pollution de la part de l'extérieur de la puce et toute fuite de produits dangereux vers l'extérieur ;
- une inertie chimique à la plupart des composés chimiques (à l'exception des dérivés de l'acide fluorhydrique), par exemple tels que les acides concentrés et les solvants non aqueux. On peut donc faire circuler dans les microcanaux diverses solutions chimiques. Par exemple les surfaces des canaux fluidiques sont naturellement hydrophiles suite aux traitements chimiques réalisés pour la fabrication de la puce. Cette spécificité est importante pour l'analyse d'échantillons biologiques. Toutefois, si nécessaire, il est possible aussi de traiter les canaux fluidiques pour les rendre hydrophobes, par circulation d'une solution adaptée. Enfin la puce peut subir des nettoyages chimiques, et peut être biopassivées en surface par une simple circulation de liquide adapté et connu de l'homme du métier, pour obtenir à volonté une biocompatibilité. On voit ici l'avantage du caractère d'inertie chimique de la puce ;
- une isolation électrique importante qui permet notamment un fonctionnement correct des circuits et l'application de champs électriques externes forts (comme dans le cas d'une électrophorèse capillaire sur puce par exemple).

Les puces microfluidiques en verre sont préférées pour la détection électrochimique/optique, en raison des propriétés du verre, contrairement aux polymères comme le PDMS. De préférence, pour l'analyse de traces métalliques, il convient de nettoyer correctement le verre qui a tendance à adsorber les métaux.

En outre, de préférence, lorsque la puce en verre n'est pas en utilisation, elle ne doit pas être laissée à sec pour éviter que les métaux ne s'adsorbent de façon irréversible sur les parois du verre et sur les électrodes. On peut la remplir d'un liquide qui permet de dissoudre de potentiels résidus de contaminants demeurant après le nettoyage. Selon le liquide utilisé, les matériaux constituant les électrodes pourront être oxydés ou évoluer vers un autre état de surface, ce qui modifierait les propriétés électrochimiques du circuit. En particulier, l'électrode de référence est très sensible à l'état chimique de surface ; son potentiel doit donc rester stable.

De préférence, le circuit est stocké sous eau ou acide nitrique, de préférence de l'acide nitrique à une concentration supérieure ou égale à 1M, de préférence de concentration 1 M ou 2,2 M, lorsqu'il n'est pas en utilisation. Le stockage sous acide nitrique est particulièrement efficace : en effet, sous ces conditions, l'électrode de référence en platine stockée avec de l'acide nitrique fournit un potentiel de surface bien stable.

Ainsi, de préférence, le procédé selon l'invention comprend une étape de stockage du circuit sous acide nitrique.

La présente invention sera mieux comprise à la lecture de la description suivante de modes de réalisation préférés, donnés à titre illustratif et non limitatif, et accompagnée de la figure ci-jointe, qui est un plan, en vue de dessus, présentant un circuit comprenant les puces microfluidiques permettant la mise en oeuvre d'un procédé selon l'invention.

### Circuit microfluidique

La figure 1 est un plan, en vue de dessus, d'un circuit comprenant les puces microfluidiques permettant de mettre en oeuvre un procédé selon un mode de réalisation préférentiel de l'invention. De préférence ce circuit comprenant les puces microfluidiques convient pour la détection de l'arsenic dans un échantillon de fluide tel que l'eau. Ce plan montre les différents canaux microfluidiques qui sont ménagés à l'intérieur de ce circuit.

Ce circuit est généralement constitué des éléments suivants :
- les réservoirs (R.3, R.4, R.5, R.7 et R.8 à R.13) : ils ont pour rôle de stocker les différentes solutions de réactifs et l'échantillon à analyser.

En particulier, le réservoir R.3 contient l'échantillon à analyser.

Typiquement, le réservoir R.4 est utilisé pour stocker l'acide nitrique (HNOs), de préférence de concentration 2,2 M. L'acide nitrique a un rôle double: il permet de nettoyer le circuit microfluidique, mais également d'acidifier l'échantillon à analyser.

De préférence, le circuit comprend un réservoir R.5, qui contient un mélange d'acide nitrique (notamment à 100 mM) et de L-cystéine (notamment à 15 mM) : il sert de blanc de mesure, ou solution témoin. En d'autres termes, le réservoir R.5 contient un échantillon dénué d'ETM, qui sert de témoin. Il permet de vérifier que le circuit n'a pas été contaminé par l'échantillon à analyser.

Le réservoir R.7 contient de la L-cystéine, de préférence à 50 mM.

De préférence, les réservoirs R.8 à R.11 contiennent des solutions de calibration. En particulier, ils contiennent des solutions d'As(lll) de concentrations respectives égales à 14.48, 28.96, 72.40 et 144.80 ppb, acidifiées à l'acide nitrique 10 mM. Ces solutions sont utilisées pour réaliser des ajouts de 2 et 4 ppb d'As(III), ou de 10 et 20 ppb d'As(III), dans l'échantillon à analyser (par définition de concentration inconnue), qui dépend de la concentration à analyser. Pour une gamme de concentrations à analyser comprise entre 0 et 10 ppb, les ajouts des solutions à 2 et 4 ppb sont utilisés, tandis que les ajouts des solutions à 10 et 20 ppb sont utilisés pour des concentrations supérieures à 10 ppb.

De préférence, le réservoir R.12 contient une solution aqueuse d'acide sulfurique (H₂SO₄), de préférence à 100 mM. Il permet notamment le nettoyage de l'électrode de travail de la puce d'analyse, par voie électrochimique entre différentes mesures.

Enfin, de préférence, le réservoir R.13 contient un mélange d'acide tétrachloroaurique (HAuCl₄), de préférence à 2 mM, et d'acide sulfurique (H₂SO₄), de préférence à 100 mM. Cette solution est utilisée pour régénérer de façon automatique par voie électrochimique l'électrode de travail (notamment en or) de la puce d'analyse, au cas où sa surface se détériorerait.
- les poubelles interne (PI) et externe (PE) :
   La poubelle externe contient l'excédent d'échantillon à analyser qui a été injecté dans le système, ou qui a été utilisé pour rincer le réservoir R.3.

La poubelle interne (poubelle munie de bouchon perméable aux gaz), inaccessible à l'utilisateur, contient toutes les solutions contenant des produits chimiques, comme les solutions d'acides, la solution de L-cystéine ou encore le mélange d'acide tétrachloroaurique et d'acide sulfurique.
- la cuve (C) :
   Il s'agit d'une cuve à recirculation avec une entrée et une sortie. Elle est utilisée pour chauffer l'échantillon à analyser, en présence de L-cystéine, et ainsi réaliser la conversion d'As(V) en As(III). Ce chauffage est typiquement réalisé grâce à une résistance chauffante montée sur la cuve.
- les débulleurs (références 8 et 10 sur la figure 1) :
   Les débulleurs sont indiqués dans un cercle sur la figure. Il y en a un entre le réservoir R.3 et l'électrovanne 1 (débulleur 8) ; et un autre au niveau de la sortie de l'électrovanne 14 (débulleur 10). Ils permettent d'enlever les bulles d'air ou de gaz piégées dans le liquide circulant dans le circuit.
- les électrovannes (EVs), représentées par des croix sur la figure :
   Il s'agit de systèmes commandés électriquement, qui permettent le passage ou non du liquide dans le circuit. Ainsi, lorsqu'une électrovanne est ouverte, elle va permettre au liquide de passer à travers, tandis que lorsqu'elle est fermée le liquide est bloqué et ne peut passer.
- les éléments de connexion (tubes, vis, unions, ferrules), représentés par un sablier comme la référence 22 sur la figure 1 :
   Ce sont les différents éléments qui permettent de connecter les différentes parties du circuit. Le liquide peut ainsi circuler dans tout le circuit.
- une bouteille de gaz (G) :
   Une bouteille d'un litre à 12 bars d'azote est utilisée pour générer une pression pour déplacer les différentes solutions dans le système. Préférentiellement, une pression positive de 500 mbars est utilisée tout au long des analyses. Cette bouteille est connectée au circuit par le biais de l'électrovanne 3, ce qui permet l'injection du gaz dans le circuit.
- les puces microfluidiques (50 et 60) :
   ∘ puce de prétraitement ou puce de mélange (référence 50 sur la figure 1) :
      Elle permet un prétraitement de l'échantillon, en réalisant les différents mélanges dans les proportions désirées. L'utilisateur est donc affranchi de ces étapes qui sont souvent longues et nécessitent la manipulation de réactifs dangereux, tels que les acides concentrés.

Elle est délimitée, sur la figure, par les entrées 51 à 58, l'entrée 51 étant connectée à l'électrovanne 21 ; et par la sortie du microcanal principal 59 (appelé également « premier microcanal ») sur l'électrovanne 12. Le microcanal principal 59, appelé également « premier microcanal », est le microcanal commençant à l'entrée 51 et se terminant à l'électrovanne 12.

Plus précisément, l'entrée 51 est reliée à la poubelle extérieure PE, via l'électrovanne 21. L'entrée 52 est reliée au réservoir R.4 (contenant l'acide nitrique) via l'électrovanne 7.

Les entrées 53, 56 et 58 ne sont pas reliées. Elles peuvent être prévues notamment pour les cas suivants : une entrée est prévue l'ajout d'un complexant, comme l'EDTA, pour complexer de potentiels interférents métalliques ; une autre entrée est prévue pour diluer l'échantillon avec de l'eau notamment ultrapure, si celui-ci est très concentré et sort de la gamme de linéarité du capteur ; enfin la dernière entrée convient pour une solution d'acide nitrique plus concentrée, qui serait utilisée en cas de dilution, afin de ramener le pH final à une valeur acceptable, par exemple 1.

L'entrée 54 est reliée au réservoir R.3 (contenant l'échantillon à analyser) via l'électrovanne 1.

L'entrée 55 est reliée au réservoir R.4 (contenant l'acide nitrique) via l'électrovanne 6. Enfin, l'entrée 57 est reliée au réservoir R.7 (contenant la L-cystéine) via l'électrovanne 4.

Cette puce 50 a une profondeur de canaux de 50 µm. Typiquement, la longueur entre l'entrée 51 et la sortie 59 est de 142 mm.

Le microcanal principal 59 a une largeur typiquement comprise entre 0.7 et 2 mm, de préférence comprise entre 0.7 et 1.5 mm, de préférence égale à 1 mm.

De préférence, le débit du microcanal principal est de 11 ml/h pour une pression de 500 mbars.

De préférence, les dimensions des différents canaux de la puce de prétraitement sont les suivants :

| **Entrée** | **Longueur du canal (en mm)** | **Largeur du canal (en mm)** |
|---|---|---|
| 51 | 15 | 1 |
| 52 | 15 | 1 |
| 53 | 15 | 0,404 |
| 54 | 15 | 0,400 |
| 55 | 144 | 0,285 |
| 56 | 15 | 0,380 |
| 57 | 36 | 0,276 |
| 58 | 36 | 0,391 |
| Sortie 59 | 15 | 1 |

De préférence, les dimensions des différents canaux sont choisies de sorte qu'à la sortie du microcanal principal de la puce, les mélanges soient homogènes et dans les proportions ci-dessous :

| | **V normalisé** |
|---|---|
| **V(échantillon)** | 0,63 |
| **V(HNO3 2,2M)** | 0,04 |
| **V(L-Cystéine 50mM)** | 0,32 |
| **Vtotal** | 1,00 |
| **Dilution de l'échantillon** | 1,58 |

De préférence, les dimensions de la puce de mélange 50 sont telles que pour un volume total normalisé sortant de la puce (égal à 1), le volume d'échantillon à analyser soit de 0,63, le volume d'acide nitrique soit de 0,04 et le volume de L-cystéine soit de 0,32. Dans ce cas, on a une dilution de l'échantillon de 1,58 (=1/0.63).
∘ puce d'analyse 60 :
   Cette puce 60 comprend un système de trois électrodes, sur lequel les mélanges sortant de la puce de prétraitement 50 sont analysés.

La puce d'analyse 60 est délimitée, sur la figure, par les entrées 61 à 67, l'entrée 61 étant connectée à un débulleur 10 et à l'électrovanne 14, par les entrées 70 à 75 ; et par la sortie du microcanal principal 69 (appelé également « second microcanal ») dans la poubelle interne PI.

Le microcanal principal 69 a une largeur typiquement comprise entre 0.7 et 2 mm, de préférence comprise entre 0.7 et 1.5 mm, de préférence égale à 1 mm.

La puce d'analyse 60 dispose typiquement de 13 entrées (références 61 à 67 et 70 à 75) et une sortie 76. Parmi ces entrées, on a les entrées 70 à 75 reliées aux réservoirs R.8 à R.13, et les entrées 61 à 67.

L'entrée 61 est reliée à un débulleur 10, à l'électrovanne 14 et au réservoir R.4 (contenant l'acide nitrique) via l'électrovanne 20.

L'entrée 62 est reliée au réservoir R.5 (contenant le blanc de mesure) via l'électrovanne 17.

Les entrées 63 à 67 peuvent être reliées à des réservoirs d'eau ultra pure, et/ou pour l'ajout de solutions tampons, comme les acétates ou les phosphates. Ils permettent en effet d'effectuer des mesures sur des échantillons très concentrés, ou à des pH proches du pH de l'eau de boisson, donc sans acidification.

En outre, les réservoirs R.8 à R.11 (contenant les solutions de calibration) sont reliés au microcanal principal 69 via, respectivement, les électrovannes 26, 28, 27 et 25.

Le réservoir R.12 (contenant la solution aqueuse d'acide sulfurique) est relié au microcanal principal 69 via l'électrovanne 18.

Enfin, le réservoir R.13 (contenant le mélange d'acide tétrachloroaurique et d'acide sulfurique) est relié au microcanal principal 69 via l'électrovanne 24.

Dans le détail, de préférence, le système de trois électrodes comprend:
- une électrode de travail en or de dimension 1,06 mm × 1 mm,
- une électrode de référence en platine de dimension 2,96 mm × 1 mm, et
- une contre-électrode en platine de dimension 6,74 mm × 1 mm,
toutes les électrodes étant situées dans le microcanal principal 69 (non représentées sur la figure 1).

La profondeur (ou largeur) de la puce d'analyse 60 est de 20 µm. La longueur entre l'entrée 61 et la sortie 76 est typiquement de 178 mm, et la largueur du microcanal principal 69 est de 1 mm.

De préférence, le débit moyen en sortie est d'environ 400 µl/h pour une pression de 500 mbars.

Typiquement, l'échantillon provenant de la puce de prétraitement entre par l'un des canaux de cette puce, par exemple l'entrée 61, tout comme l'acide nitrique du réservoir R.4.

Un autre canal (i.e. l'entrée 62 via l'électrovanne 17) est dédié au blanc de mesure (réservoir R.5) (solution témoin), qui sert de témoin pour s'assurer qu'il n y a pas de contamination provenant du système ou de l'échantillon précédent.

Les dimensions des différents canaux de la puce d'analyse nécessaires à l'obtention des ratios permettant une LOD satisfaisante sont les suivants :

| **Entrée** | **Longueur du canal (en mm)** | **Largeur du canal (en mm)** |
|---|---|---|
| 61 | 10 | 1 |
| 62 | 10 | 0,862 |
| 63 | 10 | 0,748 |
| 64 | 10 | 0,190 |
| 65 | 10 | 0,622 |
| 66 | 10 | 0,446 |
| 67 | 10 | 0,344 |
| 70 | 50 | 0,152 |
| 71 | 50 | 0,150 |
| 72 | 52 | 0,150 |
| 73 | 54 | 0,150 |
| 74 | 10 | 1 |
| 75 | 10 | 1 |
| 76 | 10 | 1 |

Typiquement, chaque puce (puce de prétraitement et/ou puce d'analyse) peut être composée de deux plaques superposées, collées l'une à l'autre. Ainsi, chaque puce peut être composée d'une première plaque, qui peut par exemple être une lame transparente de microscope, et d'une seconde plaque dont la face en contact avec la première plaque est gravée de façon à définir des microcanaux entre les deux plaques qui sont superposées et collées l'une à l'autre. La première plaque peut être constituée d'un matériau polymère. Le matériau constituant au moins l'une des deux plaques peut être transparent. Les dimensions des microcanaux sont déterminées en adaptant la largeur et la profondeur des gravures dans la plaque gravée. Il est à noter que des puces microfluidiques fabriquées selon d'autres méthodes connues de l'homme du métier peuvent évidemment être utilisées pour mettre en oeuvre l'invention.

En complément des éléments cités ci-dessus, le circuit microfluidique selon l'invention peut être connecté notamment à un moins un élément choisi parmi un dispositif électronique nécessaire pour le fonctionnement du système, une batterie, un potentiostat pour le pilotage des mesures électrochimiques, un système de refroidissement placé sur les puces pour refroidir les solutions provenant de la cuve et un écran notamment tactile qui permet de lancer la mesure souhaitée, de connaître l'état d'avancement de la mesure et de visualiser le résultat obtenu.

### Procédé microfluidique de nettoyage et/ou de régénération

Comme indiqué précédemment, l'invention se rapporte à un procédé microfluidique de nettoyage et/ou de régénération d'au moins un capteur microfluidique comprenant au moins un microcanal en verre formant un circuit microfluidique et au moins deux électrodes, comprenant au moins les étapes suivantes :
- une étape N) de nettoyage du circuit microfluidique comprenant au moins la circulation d'un échantillon de fluide dans le microcanal ; et
- une étape de nettoyage du circuit microfluidique comprenant au moins la circulation d'une solution d'acide nitrique dans le microcanal,
et tel que défini en revendication 1.

Comme indiqué ci-avant, préférentiellement, le microcanal en verre est relié fluidiquement :
- à une première extrémité, à une entrée (notamment pour l'injection de l'échantillon) et à au moins un réservoir pour l'acide nitrique, et
- à la seconde extrémité, à au moins deux réservoirs de réactifs pour régénérer au moins une électrode.

De préférence, le capteur microfluidique visé par le procédé selon l'invention comprend au moins trois électrodes qui sont:
- une électrode de travail en or,
- une électrode de référence, de préférence en platine, et
- une contre-électrode, de préférence en platine.

Le procédé selon l'invention comprend, comme étape N), au moins les quatre sous-étapes suivantes :
N1 : une sous-étape de nettoyage du circuit microfluidique comprenant l'injection et la circulation de l'échantillon de fluide dans le microcanal ;
N2 : une sous-étape de nettoyage d'au moins l'électrode en or ;
N3 : une sous-étape de dépôt sur l'électrode, par voie électrochimique ; et
N4 : une sous-étape de contrôle, par mesure d'une solution témoin,
tel que défini en revendication 1.

La présente divulgation décrit également un procédé comprenant, comme étape N), au moins deux, de préférence au moins les trois sous-étapes suivantes, et incluant au moins la sous-étape N1 et au moins la sous-étape N2 :
N1 : une sous-étape de nettoyage du circuit microfluidique comprenant l'injection et la circulation de l'échantillon de fluide dans le microcanal ;
N2 : une sous-étape de nettoyage du capteur microfluidique, de préférence d'au moins une électrode, notamment de l'électrode en or ; et/ou
N3 : une sous-étape de dépôt sur au moins une électrode, de préférence par voie électrochimique.

De préférence, la sous-étape N3 comprend le dépôt d'au moins une couche conductrice ou semi-conductrice sur au moins une électrode. La couche conductrice ou semi-conductrice peut être obtenue en utilisant tout matériau conducteur ou semi-conducteur, par exemple en utilisant un métal tel que l'or, un polymère conducteur ou encore un oxyde conducteur ou semi-conducteur.

De préférence, la sous-étape N3 comprend le dépôt de métal sur au moins une électrode. De préférence, la sous-étape N3 comprend le dépôt d'or au moins une électrode telle que l'électrode de travail. De préférence le dépôt s'effectue par voie électrochimique. En particulier, lorsque le capteur microfluidique comprend une électrode de travail en or, la sous-étape N3 comprend le dépôt d'or sur l'électrode de travail par voie électrochimique, en utilisant comme réactifs un mélange d'acide tétrachloroaurique et d'acide sulfurique.

La présente divulgation décrit également un procédé comprenant, comme étape N), au moins les sous-étapes suivantes:
N1 : une sous-étape de nettoyage du circuit microfluidique comprenant l'injection et la circulation de l'échantillon de fluide dans le microcanal ;
N2 : une sous-étape de nettoyage d'au moins l'électrode en or, par injection et circulation de l'acide sulfurique dans le microcanal ; et
N3 : une sous-étape de dépôt d'or sur l'électrode en or par voie électrochimique, avec un mélange d'acide tétrachloroaurique et d'acide sulfurique.

De préférence, la sous-étape N1 (nettoyage du circuit microfluidique) comprend l'injection et la circulation de l'échantillon dans le microcanal principal.

Préférentiellement, elle est effectuée comme suit :
Les électrovannes 1, 21 et 30 sont ouvertes. Le canal d'entrée de l'échantillon dans la puce de prétraitement 50 (entrée 54 de la puce de prétraitement) est nettoyé avec l'échantillon, puis la fraction l'échantillon ayant servi au nettoyage est renvoyée vers la poubelle externe, notamment à travers les électrovannes 21 et 30. Cette opération dure typiquement environ 30 secondes, ensuite les électrovannes sont fermées.

Par la suite, les électrovannes 2, 5 et 29 sont ouvertes. L'échantillon est poussé vers la cuve, notamment à travers l'électrovanne 2, et acheminé vers la poubelle interne, notamment grâce aux électrovannes 5 et 29. Cette opération dure typiquement 30 secondes, puis les électrovannes sont fermées.

Par la suite la cuve est vidée, notamment à l'aide des électrovannes 15, 13 et 30. L'électrovanne 15 envoie le gaz G (comme l'électrovanne 3) dans la cuve ; le gaz exerce alors une pression sur le liquide contenu dans la cuve, et le pousse vers la poubelle externe, notamment en passant par les électrovannes 13 et 30. Cette opération dure typiquement 15 secondes, puis les électrovannes sont fermées.

La sous-étape N2 comprend l'injection et la circulation d'un acide, l'acide sulfurique, dans le microcanal principal. Cet acide permet le nettoyage des capteurs microfluidiques comprenant les électrodes de mesure, notamment l'électrode en or. La méthode utilisée est notamment la voltammétrie cyclique. La sous-étape N2 comprend l'utilisation d'acide sulfurique dans le microcanal pour nettoyer au moins une électrode par voltammétrie cyclique.

La sous-étape N2 comprend également la mesure de la surface active de l'électrode, afin de vérifier qu'elle est toujours égale à une valeur cible, notamment +/- 10%.

De préférence, elle est effectuée comme suit :
Les métaux nobles comme l'or, le platine et l'argent sont très souvent utilisés comme électrode de travail. Dans ce cas, il est préférable de la nettoyer avant toute mesure, pour éliminer de potentiels oxydes formés à sa surface au cours du temps, ou pour éliminer les traces d'ETM (arsenic notamment) restées au cours de la précédente mesure sur l'électrode.

Pour cela, l'acide sulfurique (contenu dans le réservoir R.12) est utilisé pour nettoyer l'électrode en or présente dans le microcanal principal 69 de la puce d'analyse 60, notamment par voltammétrie (voltampérométrie) cyclique. Les électrovannes 18 et 29 sont ouvertes pour laisser passer cet acide. Le cyclage est typiquement réalisé entre -0,4 et 1,5 V à 200 mV/s. Cette opération dure en général 3 minutes, puis les électrovannes sont fermées.

Ainsi, le procédé selon l'invention comprend, comme étape N), au moins les sous-étapes suivantes :
N1 : une sous-étape de nettoyage du circuit microfluidique comprenant l'injection et la circulation d'un échantillon de fluide dans le microcanal ; et
N2 : une sous-étape de nettoyage d'au moins une électrode, la sous-étape N2 comprenant l'utilisation d'acide sulfurique dans le microcanal pour nettoyer au moins une électrode par voltammétrie cyclique, et comprenant la mesure de la surface active de l'électrode afin de vérifier qu'elle est toujours égale à une valeur cible notamment +/- 10%.

De préférence, lorsque cela est nécessaire, la sous-étape N3 comprend le dépôt notamment de métal sur au moins une électrode, de préférence d'or, par voie électrochimique. En particulier, la sous-étape N3 est effectuée lorsque la surface active de l'électrode (telle que mesurée notamment à la sous-étape N2) est inférieure à sa valeur cible.

De préférence, on utilise à cette fin comme réactifs un mélange d'acide tétrachloroaurique et d'acide sulfurique. Ce mélange est libéré dans le microcanal principal, et le dépôt d'or se fait par chronoampérométrie, par exemple pendant environ 300 secondes, au potentiel de pic de dépôt de Au(III) sur l'électrode de travail.

Le but de cette sous-étape N3 est d'augmenter la surface métallique électrochimiquement active (de préférence l'or), obtenue par dépôt électrochimique sous vide. En effet, lorsque les mesures sont réalisées à des potentiels très oxydants (potentiel proche du potentiel de dissolution du métal d'électrode) ou en présence de certaines espèces comme les ions chlorures pouvant favoriser la dissolution du métal d'électrode, il est important de mettre en place un système automatique de régénération du matériau d'électrode.

La surface de mesure ne sera alors plus plane, mais en relief (en 3D), car le dépôt électrochimique conduit à une surface non plane. Pour ce faire, en général les électrovannes 24 et 29 sont ouvertes pendant environ 3 minutes, le mélange d'acide tétrachloroaurique et d'acide sulfurique du réservoir R.13 est alors libéré dans l'entrée 74 puis dans le microcanal principal 69, et le dépôt d'or se fait par chronoampérométrie pendant environ 300 secondes au potentiel de pic de dépôt de Au(lll) sur l'électrode de travail. Ce potentiel est déterminé par voltammétrie cyclique. Le dépôt d'or peut aussi être réalisé lorsqu'après un certain nombre de mesures, la surface d'or active est réduite, ce qui se traduit par une diminution de l'aire de pic de réduction des oxydes d'or par mesure en voltammétrie cyclique. Dans ce cas, le système lance de façon automatique un dépôt d'or pour procéder à une régénération.

Une fois le dépôt effectué, l'aire de réduction des oxydes d'or est mesurée à nouveau ; si elle est égale à la valeur cible +/- 10%, alors le dépôt est arrêté de façon automatique, sinon il continue jusqu'à atteindre la gamme cible.

De préférence, la sous-étape N4 est effectuée comme suit :
Une mesure de la solution témoin (blanc) peut être réalisée pour vérifier la propreté du circuit préalablement nettoyé. Pour cela, les électrovannes 17 et 29 sont généralement ouvertes pendant environ 5 minutes. L'analyse du blanc (solution témoin) (contenu dans le réservoir R.5) se fait typiquement par SWV (Square Wave Voltammetry, ou voltammétrie à ondes carrées en français).

Le contenu du réservoir R.5 est libéré dans l'entrée 62 puis dans le microcanal principal 69, pour être mesuré, avant d'être éliminé dans la poubelle interne.

L'analyse du blanc se fait avec un potentiel de dépôt (Edep) de -1,1 V, pendant 90 secondes (Tdep), avec une amplitude de 0,02 V. Le signal est enregistré entre -0,2 et 0,7 V. Si un pic apparaît, alors les sous-étapes N1 à N3 sont relancées, de préférence de façon automatique, sinon on passe à l'étape b) du procédé selon l'invention.

Le procédé selon l'invention comprend également une étape de nettoyage du circuit microfluidique comprenant au moins le rinçage du microcanal du capteur avec de l'acide nitrique.

Typiquement, après analyse, les électrovannes 7, 12, 5 et 29 sont ouvertes, notamment pendant 30 secondes, pour nettoyer la cuve et les microcanaux contenant de l'acide nitrique. L'acide nitrique restant dans la cuve est utilisé pour nettoyer la puce d'analyse 60, typiquement en ouvrant les électrovannes 14, 15 et 29, pendant environ 30 secondes. Cette puce est nettoyée à nouveau, puis remplie d'acide nitrique pour stockage, généralement pendant 10 minutes, en ouvrant les électrovannes 20 et 29.

Le procédé de nettoyage et/ou de régénération selon l'invention peut être utilisé dans un procédé microfluidique d'analyse d'un fluide contenant au moins un ETM comprenant les étapes suivantes :
a) introduction d'un échantillon de fluide dans au moins un microcanal d'un circuit microfluidique ;
b) mélange, au sein du microcanal du circuit microfluidique, de l'échantillon de fluide introduit à l'étape a), avec des réactifs, et
c) mesure de la quantité d'ETM présent dans l'échantillon obtenu en b), en utilisant une méthode de détection électrochimique utilisant un capteur microfluidique.

De préférence, l'étape c) est effectuée en utilisant au moins 2 électrodes, de préférence au moins 3 électrodes, de préférence au moins 3 électrodes dont une en or.

De préférence, le procédé de nettoyage et/ou de régénération selon l'invention peut être utilisé dans un procédé microfluidique d'analyse d'un fluide contenant de l'arsenic, comprenant les étapes suivantes :
a) introduction d'un échantillon de fluide dans au moins un microcanal d'un circuit microfluidique ;
b) mélange, au sein du microcanal du circuit microfluidique, de l'échantillon de fluide introduit à l'étape a), avec de l'acide nitrique et de la L-cystéine, et
c) mesure de la quantité d'arsenic présent dans l'échantillon obtenu en b), en utilisant une méthode de détection électrochimique utilisant un capteur microfluidique.

De préférence, l'étape c) est effectuée en utilisant au moins 2 électrodes, de préférence au moins 3 électrodes, de préférence au moins 3 électrodes dont une en or.

L'étape a) d'introduction d'un échantillon de fluide dans au moins un microcanal d'un circuit microfluidique est de préférence effectuée selon les sous-étapes suivantes :
a1) injection de l'échantillon dans le circuit microfluidique ; puis
a2) mise sous pression de l'échantillon dans le circuit.

L'injection de l'échantillon dans le circuit microfluidique (sous-étape a1) est notamment effectuée en injectant ledit échantillon dans l'entrée du premier microcanal de la première puce du circuit. Notamment, cette étape est effectuée à l'aide d'une seringue munie d'un filtre 0,45 µm. Le filtre permet d'éliminer toutes les matières en suspension ayant un diamètre supérieur à 0,45 µm.

Plus précisément, en se référant à la figure, initialement les électrovannes 9, 16 et 30 sont ouvertes. L'électrovanne 9 laisse passer l'échantillon (E) vers le réservoir R.3. Une partie de cet échantillon est utilisée pour rincer le réservoir et va vers la poubelle externe PE à travers les électrovannes 16 et 30, tandis que le reste de l'échantillon reste dans le réservoir R.3 et sert pour l'analyse.

Typiquement, cette opération peut durer quelques minutes ou secondes, puis les électrovannes 9, 16 et 30 sont fermées.

Ensuite, ledit échantillon est mis sous pression (sous-étape a2). La mise sous pression de l'échantillon peut être effectuée par n'importe quel moyen, par exemple par injection d'un gaz, notamment inerte, ou bien par aspiration. Par exemple, la mise sous pression peut être effectuée grâce à une pompe ou une seringue. Grâce à sa mise sous pression, l'échantillon est mis en mouvement.

Par exemple, l'échantillon est stocké dans un réservoir (R.3) connecté à un microcanal du circuit microfluidique. De préférence, il est stocké dans un réservoir (R.3) connecté au premier microcanal de la première puce, et la mise sous pression du réservoir R.3 est réalisée notamment par l'ouverture d'une électrovanne (l'électrovanne 3), qui est reliée à la bouteille d'azote gazeux (G).

De préférence, les autres réservoirs, excepté le réservoir R.3, sont toujours sous pression pendant tout le procédé (i.e. avant et après la mesure). L'électrovanne 3 reste ouverte le temps de l'analyse ; elle est fermée à la fin de la mesure.

Entre les étapes a) et b) du procédé, le procédé selon l'invention est mis en oeuvre, selon les modalités détaillées ci-avant.

Une fois l'échantillon introduit et l'(es) étape(s) de nettoyage effectuée(s), s'ensuit la deuxième étape (étape b) : le mélange, au sein du microcanal du circuit microfluidique, de l'échantillon avec des réactifs, de préférence l'acide nitrique et la L-cystéine.

Typiquement, lors de cette étape b), les deux réactifs notamment présents dans les deux réservoirs reliés fluidiquement à une extrémité de la première puce sont libérés dans le premier microcanal de ladite première puce, et se mélangent à l'échantillon injecté dans l'entrée.

De préférence, le mélange obtenu est ensuite acheminé dans une cuve, de préférence dans la cuve reliée à la seconde extrémité du premier microcanal de la première puce.

De préférence, le premier microcanal de la première puce est le microcanal principal (microcanal 59 sur la figure 1), et a une largeur typiquement comprise entre 0.7 et 2 mm, de préférence comprise entre 0.7 et 1.5 mm, de préférence égale à 1 mm ; et une longueur typiquement comprise entre 30 et 60 µm, de préférence entre 40 et 55 µm.

De préférence, le débit du microcanal de la première puce est de 11 ml/h pour une pression de 500 mbars.

Typiquement, lors de cette étape b), on ouvre les électrovannes 4, 1, 5, 6, 12 et 29. L'échantillon, l'acide nitrique et la L-cystéine sont ainsi mélangés dans les proportions désirées grâce à la puce de mélange 50 puis acheminés dans la cuve à travers l'électrovanne 12. Cette opération dure généralement quelques minutes, typiquement de 2 à 5 minutes, de préférence de 2 à 3 minutes, plus préférentiellement 2 minutes et 15 secondes, puis les électrovannes sont refermées.

Ensuite, on rince les tubes de connexion et la cuve avec l'échantillon prétraité.

Par suite, on ouvre les électrovannes 11, 15 et 29, notamment pendant 15 secondes. L'échantillon prétraité est ainsi acheminé vers la poubelle interne.

On remplit à nouveau la cuve en ouvrant les électrovannes 4, 1, 5, 6, 12 et 29, généralement pendant quelques minutes, typiquement de 2 à 5 minutes, de préférence de 2 à 3 minutes, plus préférentiellement 2 minutes et 15 secondes, puis on achemine l'échantillon prétraité, cette fois-ci, vers la puce d'analyse 60 en ouvrant les électrovannes 14, 15 et 29.

De préférence, les dimensions des différents canaux sont choisies de sorte qu'à la sortie du microcanal principal 59 de la puce 50, les mélanges soient homogènes et dans des proportions spécifiques.

En particulier, le mélange d'échantillon, d'acide nitrique (à 2,2 mM) et de L-cystéine (à 50 mM) est réalisé dans un ratio volumique respectif de 0,6-0,7 : 0,03-0,05 : 0,25-0,40. De préférence, ce ratio volumique respectif est égal à 0,63 : 0,04 : 032.

Enfin, une fois l'échantillon mélangé avec des réactifs, de préférence l'acide nitrique et la L-cystéine, le procédé comprend une étape c) de mesure de la quantité d'ETM présent dans l'échantillon obtenu en b), en utilisant au moins 3 électrodes dont une en or.

L'étape c) comprend de préférence la circulation de l'échantillon obtenu en b), depuis la cuve à travers le second microcanal de la puce d'analyse, comprenant au moins trois électrodes dont une en or.

De préférence, le second microcanal de la seconde puce (puce d'analyse) est le microcanal principal (microcanal 69 sur la figure 1), et a une largeur typiquement comprise entre 0.1 et 2 mm, de préférence comprise entre 0.12 et 1.5 mm; et une longueur typiquement comprise entre 5 et 80 mm, de préférence comprise entre 9 et 60 mm.

Typiquement, lors de l'étape c), l'échantillon obtenu en b) (appelé également échantillon prétraité), une fois dans la puce d'analyse 60, est analysé en utilisant au moins 3 électrodes dont une en or.

Plus spécifiquement, dans le cas de l'arsenic, lors de l'étape c), l'échantillon prétraité est analysé en utilisant au moins 3 électrodes dont une en or, et selon les sous-étapes suivantes :
c1) mesure de la quantité d'arsenic (III) présent dans l'échantillon, appelée As(III), puis
c2) conversion de l'arsenic (V) restant dans l'échantillon en arsenic (III), puis mesure de la quantité d'arsenic (III) obtenue, appelée As tot, et enfin
c3) la détermination de la quantité d'arsenic effectivement présente dans l'échantillon par la formule As(V) = As tot - As(III).

Tout d'abord, la quantité d'As(III) est déterminée ; c'est l'étape c1).

De préférence, cette étape c1) fait intervenir au moins une solution étalon. De préférence, l'étape c1) comprend le mélange de l'échantillon obtenu en b) avec au moins une solution étalon, de préférence deux solutions étalons de concentrations différentes, puis la détermination de la concentration en As(lll) présente dans l'échantillon. Par « solution étalon », on entend une solution comprenant une concentration connue d'As(III). Par exemple, on peut utiliser une première solution étalon comprenant une concentration en As(lll) comprise entre 5 et 15 ppb, et une seconde solution étalon comprenant une concentration en As(lll) comprise entre 15 et 25 ppb ; ou bien on peut utiliser une première solution étalon comprenant une concentration en As(lll) comprise entre 1 et 3 ppb, et une seconde solution étalon comprenant une concentration en As(lll) comprise entre 3 et 5 ppb

De préférence, la quantité d'As(III) est mesurée en faisant circuler l'échantillon obtenu en b) par SWV, notamment avec les mêmes paramètres électrochimiques que la solution témoin (blanc), à l'exception de Tdep (temps de dépôt), à savoir un potentiel de dépôt (Edep) de -1.1 V, pendant 120 secondes (Tdep), avec une amplitude de 0,02 V, et le signal est enregistré entre -0,2 et 0,7 V.

La moyenne de l'aire (Amoy) du pic mesurée au cours de la désorption de l'arsenic sur l'électrode en or est comparée à des valeurs seuils.

En particulier :
- si 3×10⁻³ µAV < Amoy < 3×10⁻² µAV, alors le système ouvre les électrovannes 27 et 25, qui fournissent des concentrations d'ajouts (solutions étalons) dans le mélange de 10 et 20 ppb respectivement (i.e. réservoirs R.10 et R.11). A chaque ajout, Amoy (ajout) est mesuré. Ainsi, les valeurs de Amoy, Amoy (ajout1) et Amoy (ajout2) sont utilisés pour déterminer la concentration de l'As(III) dans l'échantillon ;
- si Amoy < 3×10⁻³ µAV, alors on refait la mesure d'Amoy en utilisant un temps de dépôt de 360 secondes. Dans ce cas, si le signal obtenu donne une Amoy< 3×10⁻⁴ µAV, alors l'échantillon contient de l'As(lll) en concentration inférieure à la limite de quantification de 0,85 ppb. A l'opposé, si Amoy > 3×10⁻⁴ µAV, alors le système ouvre les électrovannes 26 et 28, qui fournissent des concentrations d'ajouts dans le mélange de 2 et 4 ppb respectivement (i.e. réservoirs R.8 et R.9). A chaque ajout, Amoy (ajout) est mesuré. Ainsi, les valeurs de Amoy, Amoy (ajout1) et Amoy (ajout2) sont utilisés pour déterminer la concentration de l'As(III) dans l'échantillon ;
- si Amoy > 3×10⁻² µAV, l'échantillon est dilué de façon automatique au niveau de la puce de prétraitement 50, et en fonction de Amoy mesuré. Ensuite, un Tdep de 360 secondes ou de 120 secondes est appliqué.

Ensuite, la quantité d'As(V) est déterminée ; c'est l'étape c2).

La mesure de l'As(V) est obtenue de façon indirecte en faisant la soustraction du contenu en As(lll) réel par rapport au contenu en arsenic total (As tot) (soit As(V) = As tot - As(III)). L'arsenic total (As tot) est obtenu en convertissant tout l'As(V) en As(III).

Pour convertir l'arsenic (V) en arsenic (III), de préférence une étape d'incubation de l'échantillon obtenu en b) a lieu dans la cuve, préférentiellement par chauffage. Typiquement, cette étape d'incubation est effectuée pendant quelques minutes.

Pour cela, lorsque le mélange se trouve dans la cuve, les électrovannes sont fermées, et la cuve est chauffée à l'aide de la résistance chauffante, notamment pendant 10 minutes. Ainsi tout l'As(V) est transformé en As(III), qui, combiné à l'As(III) déjà présent dans l'échantillon, donne la quantité d'arsenic totale. Ce mélange est par la suite acheminé dans la puce d'analyse 60 comme précédemment décrit (i.e. en ouvrant les électrovannes 14, 15 et 29), pour être dosé. La puce d'analyse 60, disposant d'un système de refroidissement, permet de refroidir le mélange autour de 22-23°C, puis d'effectuer la mesure en As(III), de la même façon que décrit ci-dessus.

L'invention est maintenant illustrée par l'exemple suivant.

### Exemple 1 : mise en oeuvre du procédé selon l'invention pour nettoyer des électrodes dans un circuit microfluidiaue de détection d'arsenic dans l'eau

Un circuit microfluidique tel que décrit en figure 1 est mis en oeuvre, et contient, dans le microcanal principal 69, trois électrodes qui sont :
- une électrode de travail en or,
- une électrode de référence en platine, et
- une contre-électrode en platine.

Le procédé de nettoyage et régénération selon l'invention est mis en oeuvre, et comprend les étapes N1 à N4 et le nettoyage avec l'acide nitrique.

On mesure des solutions témoins au cours de 280 manipulations de détection de l'arsenic, et le signal électrochimique ne fait apparaître aucun pic dû à des traces d'arsenic. Ces 280 analyses correspondent à 4 mois d'analyses en utilisant la même puce microfluidique. On n'observe, dans la gamme de potentiel d'apparition du signal d'arsenic (-0,2 à 0,6 V par rapport à une électrode de référence en platine), aucun pic traduisant la présence de l'arsenic.

Le procédé selon l'invention est donc très efficace, surtout que le verre est connu pour adsorber les ETM.

## Revendications

1. Procédé microfluidique de nettoyage et/ou de régénération d'au moins un capteur microfluidique comprenant au moins un microcanal en verre formant un circuit microfluidique et au moins deux électrodes, dont une électrode de travail en or, comprenant au moins les étapes suivantes :
- une étape N) de nettoyage du circuit microfluidique comprenant les quatre sous-étapes suivantes :
N1 : une sous-étape de nettoyage du circuit microfluidique comprenant l'injection et la circulation d'un échantillon de fluide dans le microcanal ;
N2 : une sous-étape de nettoyage d'au moins l'électrode en or, la sous-étape N2 comprenant l'utilisation d'acide sulfurique dans le microcanal pour nettoyer au moins l'électrode par voltammétrie cyclique, et comprenant la mesure de la surface active de l'électrode afin de vérifier qu'elle est toujours égale à une valeur cible notamment +/- 10% ;
N3 : une sous-étape de dépôt d'or sur l'électrode de travail par voie électrochimique; et
N4 : une sous-étape de contrôle, par mesure d'une solution témoin ; et
- une étape de nettoyage du circuit microfluidique comprenant au moins la circulation d'une solution d'acide nitrique dans le microcanal.

2. Procédé selon la revendication 1, **caractérisé en ce que** le microcanal en verre est relié fluidiquement :
- à une première extrémité, à une entrée et à au moins un réservoir pour l'acide nitrique, et
- à la seconde extrémité, à au moins deux réservoirs de réactifs pour régénérer au moins une électrode.

3. Procédé selon la revendication 1 ou 2, **caractérisé en ce que** le capteur microfluidique comprend au moins trois électrodes qui sont:
- une électrode de travail en or,
- une électrode de référence, de préférence en platine, et
- une contre-électrode, de préférence en platine.

4. Procédé selon l'une des revendications 1 à 3, **caractérisé en ce que** la sous-étape N3 comprend le dépôt d'au moins une couche conductrice ou semi-conductrice d'or sur au moins l'électrode d'or lorsque la surface active de l'électrode est inférieure à sa valeur cible.

5. Procédé selon l'une des revendications 1 à 4, **caractérisé en ce que** la sous-étape N3 comprend le dépôt d'or sur l'électrode de travail par voie électrochimique, en utilisant comme réactifs un mélange d'acide tétrachloroaurique et d'acide sulfurique.

6. Procédé selon l'une des revendications 3 à 5, **caractérisé en ce qu'**il comprend, comme sous-étapes N2 et N3, les sous-étapes suivantes :
N2 : une sous-étape de nettoyage d'au moins l'électrode en or, par injection et circulation de l'acide sulfurique dans le microcanal ; et
N3 : une sous-étape de dépôt d'or sur l'électrode en or par voie électrochimique, avec un mélange d'acide tétrachloroaurique et d'acide sulfurique.

7. Procédé selon l'une des revendications 1 à 6, **caractérisé en ce qu'**il comprend une étape de stockage du circuit sous acide nitrique.

## Patentansprüche

1. Mikrofluidisches Verfahren zum Reinigen und/oder Regenerieren mindestens eines mikrofluidischen Sensors, umfassend mindestens einen Mikrokanal aus Glas, der einen mikrofluidischen Kreislauf bildet, und mindestens zwei Elektroden, darunter eine Arbeitselektrode aus Gold, umfassend mindestens die folgenden Schritte:
- einen Schritt N) zum Reinigen des mikrofluidischen Kreislaufs, umfassend die folgenden vier Teilschritte:
N1: einen Teilschritt eines Reinigens des mikrofluidischen Kreislaufs, umfassend das Einspritzen und Zirkulieren einer Fluidprobe in den Mikrokanal;
N2: einen Teilschritt eins Reinigens mindestens der Goldelektrode, der Teilschritt N2 umfassend die Verwendung von Schwefelsäure in dem Mikrokanal, um mindestens die Elektrode durch zyklische Voltammetrie zu reinigen, und umfassend das Messen der aktiven Oberfläche der Elektrode, um zu überprüfen, dass sie immer gleich einem Zielwert ist, insbesondere +/-10 %;
N3: einen Teilschritt eines elektrochemischen Abscheidens von Gold auf die Arbeitselektrode; und
N4: einen Teilschritt eines Kontrollierens durch Messen einer Kontrolllösung; und
- einen Schritt eines Reinigens des mikrofluidischen Kreislaufs, umfassend mindestens das Zirkulieren einer Salpetersäurelösung durch den Mikrokanal.

2. Verfahren nach Anspruch 1, **dadurch gekennzeichnet, dass** der Mikrokanal aus Glas fluidisch wie folgt verbunden ist:
- an einem ersten Ende an einem Einlass und mindestens einem Behälter für die Salpetersäure und
- an dem zweiten Ende an mindestens zwei Reagenzienbehältern, um mindestens eine Elektrode zu regenerieren.

3. Verfahren nach Anspruch 1 oder 2, **dadurch gekennzeichnet, dass** der mikrofluidische Sensor mindestens drei Elektroden umfasst, die wie folgt sind:
- eine Arbeitselektrode aus Gold,
- eine Referenzelektrode, vorzugsweise aus Platin, und
- eine Gegenelektrode, vorzugsweise aus Platin.

4. Verfahren nach einem der Ansprüche 1 bis 3, **dadurch gekennzeichnet, dass** der Teilschritt N3 das Abscheiden mindestens einer leitenden oder halbleitenden Goldschicht auf mindestens die Goldelektrode umfasst, wenn die aktive Fläche der Elektrode kleiner als ihr Zielwert ist.

5. Verfahren nach einem der Ansprüche 1 bis 4, **dadurch gekennzeichnet, dass** der Teilschritt N3 das elektrochemische Abscheiden von Gold auf die Arbeitselektrode umfasst, wobei als Reagenzien ein Gemisch aus Tetrachloroaurinsäure und Schwefelsäure verwendet wird.

6. Verfahren nach einem der Ansprüche 3 oder 5, **dadurch gekennzeichnet, dass** es als
Teilschritt N2 und N3 die folgenden Teilschritte umfasst:
N2: einen Teilschritt eines Reinigens mindestens der Goldelektrode durch Injektion und Zirkulation von Schwefelsäure in den Mikrokanal; und
N3: einen Teilschritt eines elektrochemischen Abscheidens von Gold auf die Goldelektrode mit einem Gemisch aus Tetrachloroaurinsäure und Schwefelsäure.

7. Verfahren nach einem der Ansprüche 1 bis 6, **dadurch gekennzeichnet, dass** es einen Lagerungsschritt des Kreislaufs unter Salpetersäure umfasst.

## Claims

1. A microfluidic method for cleaning and/or regenerating at least one microfluidic sensor comprising at least one glass microchannel forming a microfluidic circuit and at least two electrodes, one of them being a working electrode in gold, comprising at least the following steps:
- a step N) to clean the microfluidic circuit, comprising the following four sub-steps:
N1: a sub-step to clean the microfluidic circuit, comprising the injection and circulation of a fluid sample in the microchannel;
N2: a sub-step to clean at least the gold electrode, sub-step N2 comprising the use of sulfuric acid in the microchannel to clean at least the electrode by cyclic voltammetry, and comprising measurement of the active surface of the electrode to verify that it still remains equal to a target value in particular +/- 10 %;
N3: a sub-step to deposit gold on the working electrode via electrochemical route; and/or
N4: a control sub-step by measuring a control solution; and
- a step to clean the microfluidic circuit, comprising at least the circulation of a nitric acid solution in the microchannel.

2. The method according to claim 1, **characterized in that** the glass microchannel is fluidly connected:
- to a first end, to an inlet and to at least one reservoir for nitric acid; and
- to the second end, to at least two reservoirs for reagents to regenerate at least one electrode.

3. The method according to claim 1 or 2, **characterized in that** the microfluidic sensor comprises at least three electrodes which are:
- a working electrode in gold;
- a reference electrode, preferably in platinum; and
- a counter electrode, preferably in platinum.

4. The method according to one of claims 1 to 3, **characterized in that** sub-step N3 comprises the deposition of at least one conductive or semiconductive layer of gold, on at least the gold electrode, when the active surface of the electrode is lower than the target value thereof.

5. The method according to one of claims 1 to 4, **characterized in that** sub-step N3 comprises the deposition of gold on the working electrode via electrochemical route, using as reagents a mixture of tetrachloroauric acid and sulfuric acid.

6. The method according to one of claims 3 to 5 **characterized in that**, as sub-steps N2 and N3, it comprises the following sub-steps:
N2: a sub-step to clean at least the gold electrode, by injection and circulation of sulfuric acid in the microchannel; and
N3: a sub-step to deposit gold on the gold electrode via electrochemical route, with a mixture of tetrachloroauric acid and sulfuric acid.

7. The method according to one of claims 1 to 6, **characterized in that** it comprises a step to store the circuit under nitric acid.
